(19) Europäisches Patentamt

European Patent Office

Office européen des brevets

(11) Publication number: **0 327 182 B1**

(12) **EUROPEAN PATENT SPECIFICATION**

(45) Date of publication of patent specification:
02.05.91 Bulletin 91/18

(51) Int. Cl.⁵: **G01G 19/52, A47F 9/00**

(21) Application number: 89200234.6

(22) Date of filing: 03.02.89

(54) A merchandising counter with an electronic weighing device.

(30) Priority: 05.02.88 NL 8800278

(43) Date of publication of application:
09.08.89 Bulletin 89/32

(45) Publication of the grant of the patent:
02.05.91 Bulletin 91/18

(84) Designated Contracting States:
BE DE NL

(56) References cited:
EP-A- 0 018 656
DE-A- 3 003 255
GB-A- 2 085 295

(73) Proprietor: TEC-KEYLARD WEEGSCHALEN
NEDERLAND B.V.
Parallelweg 6
NL-1541 BA Koog aan de Zaan (NL)

(72) Inventor: Oerlemans, Harm
Ringweg 6
NL-1852 CM Heiloo (NL)

(74) Representative: Smulders, Theodorus A.H.J.,
Ir. et al
Vereenigde Octrooibureaux Nieuwe Parklaan
107
NL-2587 BP 's-Gravenhage (NL)

## Description

This invention relates to a merchandising counter with an electronic weighing device, said counter being provided with at least one working board, and said weighing device comprising a weighing mechanism, a weighing platform connected to the weighing mechanism via support elements, a keyboard and price and/or weight display means.

Merchandising counters or showcases are largely used in butcher's shops, greengrocer's shops, cheese-shops etc. ; in general in places where the goods to be sold need protection from external influences, such as dirt and dust, and must be displayed in many cases in cooled condition so as to be clearly visible to the customer. Provided on the working board of the counter or on a level surface near the counter is a weighing device for weighing the articles displayed. At present the weighing device is often of the electronic type, which, after the price per standard amount has been fed, is capable of issuing a receipt indicating the price to be paid and/or is capable of indicating the price and/or the weight on a display.

British patent 2,085,295 discloses a merchandising counter of the type defined in the preamble of the main claim, in the top surface of which a plurality of openings allowing delivery of articles to a slide ending near the customer. One or more weighing devices may be provided on the counter top between the openings.

When the weighing device is located on the working board of the counter, as is the case with this known counter, but also with known counters in general, this has one or more of the following drawbacks. The weighing device constitutes a major obstacle to the shop assistants when picking up articles displayed in the showcase before the weighing device which moreover often cuts off the customer's view over the weighed articles which is not appreciated. In addition, it is difficult to keep a working board with a weighing device disposed thereon in a clean condition, which is of great importance, especially in the case of butcher's shops. Finally, the weighing device disposed on the working board adversely affects the outline of the often carefully designed showcase, which may adversely affect the attraction of the displayed articles for the customer.

These problems can be removed in part by disposing the weighing device on a level surface located at some distance from the counter, but this adds to the disadvantage that the customer cannot see the weighed articles, while it is moreover utterly trying to the shop assistants to have to keep walking up and down between the counter and the weighing device.

It is an object of the invention to provide a solution for the above-described problems by means of a counter of the above-mentioned type, characterized in that the weighing mechanism is disposed beneath the working board, and that the price and/or weight display means comprise at least a display panel secured to the counter so as to be visible from one longitudinal side of the working board, and that the keyboard is mounted on the counter so as to be operable from the opposite longitudinal side of the working board.

A solution for all the problems connected with the known weighing device arrangements is provided by the shops according to the invention in that only the actual weighing platform is located on the working board of the counter, where it occupies hardly any space, does not influence the outline of the counter and gives the customer an unrestricted view over the articles to be weighed, while furthermore the weighing platform and its support elements connected with the casing of the weighing device can be easily cleaned by removing the weighing platform from these support elements. The support elements can be carried through passageways in the working board while they are properly sealed against moisture and dirt.

It is observed that European patent application No. 0018656 discloses a weighing device disposed within a casing resistant to explosion, said casing being provided with a window through which the display panel is visible. The weighing platform is located above the top surface of the casing at some distance from the actual weighing device. However, this is not a weighing device in a counter, while furthermore a keyboard is absent.

The counter according to the invention may be fitted with existing electronic weighing devices with a display for the customer and mostly also for the shop assistants and with a keyboard for feeding the price per standard amount and the type of article, which weighing device may be provided, if desired, with a printer for issuing a receipt indicating the weight and/or the price.

The invention will now be illustrated by a practical example with reference to the accompanying drawings, in which :

Fig. 1 is a perspective view of a merchandising counter with an integrated electronic weighing device ;

Fig. 2 is a cross-sectional side view of the counter according to Fig. 1 ; and

Fig. 3 is a partial back view of a preferred embodiment.

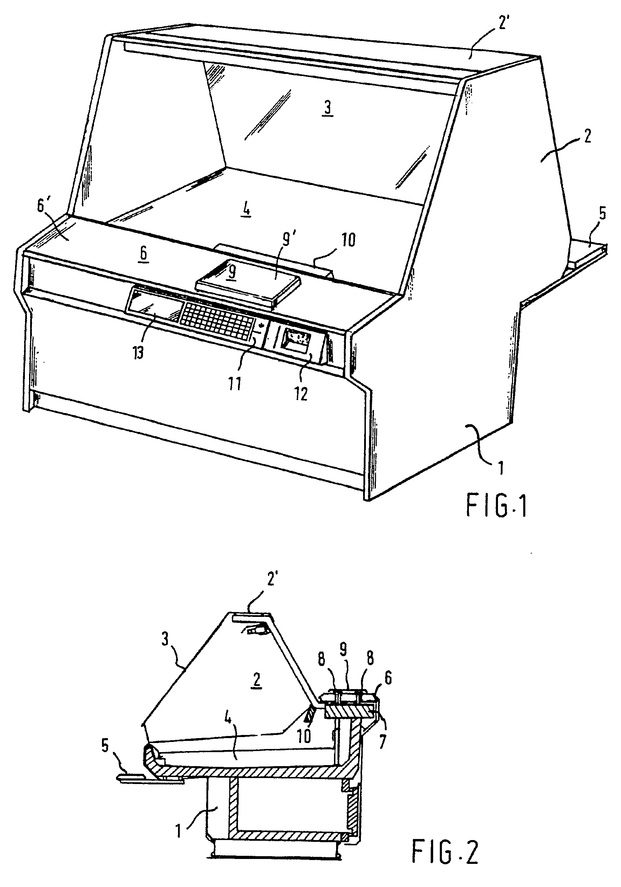

Fig. 1 shows a perspective view of a generally known counter with a cooling equipment, e.g., of the type Intra 90 supplied by the firm of Fri-jado. This counter is composed of a base 1 and a construction 2 having at the top a level surface 2', said construction showing a transparent front side 3 affording the customer an unobstructed view over the articles displayed in a showcase 4. Provided at one side of the counter is a supporting shelf 5 for the customers, while at the opposite side there is provided a working board 6 for the shop assistants.

As is clearly shown in Figs. 1 and 2, the casing 7 of an electronic weighing device is disposed beneath the working board 6. This electronic weighing device may be of a known type, e.g., of the "show scale SL-65" type of TEC (Tokyo Electric Corporation). Four support elements 8, two of which are shown in Fig. 2, project from the casing 7 and carry the actual weighing platform 9. The function of these elements is to transmit the weight of the articles placed thereon to the weighing mechanism (not shown) in the casing 7. The weighing mechanism often comprises a so-called load cell composed of a bridge circuit of strain gauges and the associate electronic equipment for determining the weight placed on the weighing platform. The working board 6 is fitted with four passageways allowing passage of the support elements 8, which passageways can be sealed against dirt and moisture in a manner known to those skilled in the art. The weighing platform 9 rests on the support elements and can be easily removed therefrom for cleaning purposes etc., so that the working board 6 can be properly cleaned. If desired, the working board 6 can be slightly elevated at both sides of the weighing platform 6, so that the top surface 6' of the working board 6 is coplanar with the top surface 9' of the weighing platform 9.

Located at the side of the working platform 6 facing the customer is a display 10, which can be disposed on or within the showcase at any desired place, so that it is optimally visible to the customer, on which display the price and/or the weight of the weighed article and, if desired, other information required is given. Located at the side facing the shop assistants is a keyboard 11, which may also be provided with a display 13, for feeding the data required for weighing and determining the price, while the display preferably gives the same information as the display 10. Finally, beside the keyboard 11 there may be provided a printer 12 for automatically issuing on weighing a receipt indicating the price and/or the weight and, if desired, further data. The keyboard 11 as well as the associate display panel and the printer may be located at different other places in the counter that are easily accessible or visible to the shop assistants. Thus, for instance, it has proved very useful in practice to dispose the keyboard 11 beside the weighing platform 9 on the working board 6, so that the keys are in coplanar relationship with the working board and/or the weighing platform. The keyboard is then preferably so constructed that the actual surface of operation of the keys is a panel sealed against moisture and dirt, showing a division for indicating the key positions. Such keyboards are generally known.

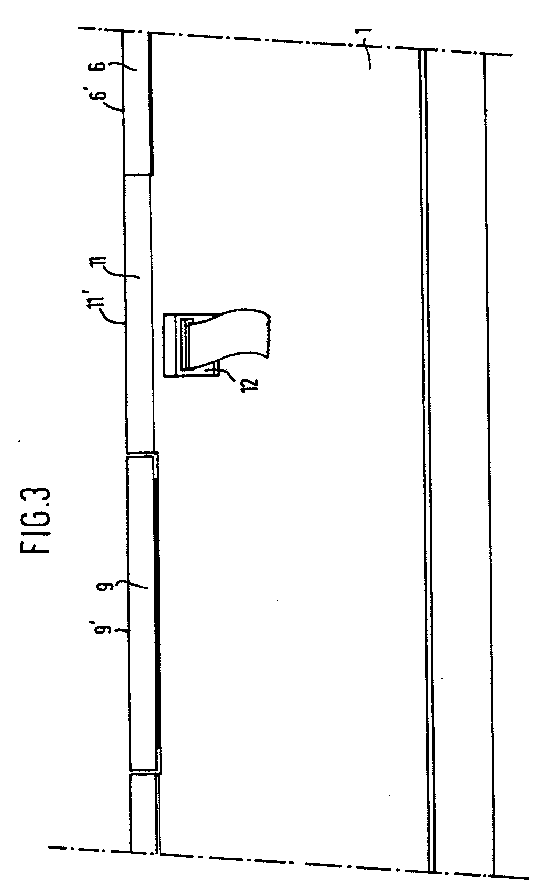

Fig. 3 shows a partial back view of a preferred embodiment of the invention, using known components in a very simple manner, namely a weighing device, a keyboard and a printer. For this purpose a space is left in the working board 6 in which the weighing device 7, the keyboard 11 and the printer 12 are so arranged that the top surface 9' of the weighing platform 9 and the top surface 11' of the keyboard are in coplanar relationship with the top surface 6' of the working board 6. Of course, also here there may be provided a display panel 13 for the shop assistants, e.g. in coplanar relationship with the keyboard or at any other desired place. In this embodiment too, the top surface of the keyboard is preferably sealed against moisture and dirt.

It will be clear that the steps according to the invention provide a merchandising counter with an electronic weighing device optimally adapted to the present requirements imposed by retail dealers and their customers, so that all the problems of the existing arrangements of weighing devices on or near a merchandising counter have become things of the past.

Although the invention has been illustrated by means of a counter in the form of a showcase, it will be clear that the principle of the invention is also applicable to counters of a different type, even if these are composed of only one flat level surface.

## Claims

1. A merchandising counter with an electronic weighing device, said counter (1, 2) being provided with at least one working board (6), and said weighing device (7, 8, 9) comprising a weighing mechanism, a weighing platform (9) connected to the weighing mechanism via support elements (8), a keyboard (11) and price and/or weight display means, characterized in that the weighing mechanism is disposed beneath the working board (6), and that the price and/or weight display means comprise at least a display panel (10) secured to the counter so as to be visible from one longitudinal side of the working board (6), and that the keyboard (11) is mounted on the counter so as to be operable from the opposite longitudinal side of the working board (6).

2. A counter as claimed in claim 1, characterized in that the top surface (9') of the weighing platform (9) is coplanar with the top surface (6') of the working board (6).

3. A counter as claimed in claim 1, characterized in that the support elements (8) are carried through the working board, the weighing platform being located at a small distance from the top surface of the working board.

4. A counter as claimed in at least one of claims 1-3, characterized in that the display panel (10) can be mounted in or on the counter at any desired place.

5. A counter as claimed in one of claims 1-4, characterized in that the keyboard (11) is located beside the weighing platform (9) with the keys being in coplanar relationship with the top surface (6') of the working board (6).

6. A counter as claimed in one of claims 1-5, characterized in that near the keyboard (11) there is provided a second display panel (13) mounted on the counter so as to be visible from the opposite side of the working board (6).

7. A counter as claimed in one of claims 1-6, characterized in that the price and/or weight display means comprise a printer unit (12).

8. A counter as claimed in claim 3, characterized in that there are provided four support elements (8) for the weighing platform (9) which are carried through four passageways in the working board (6) via a moisture-proof sealing.

## Ansprüche

1. Verkaufsladentisch mit einem elektronischen Wägegerät, wobei der Ladetisch (1, 2) mit wenigstens einer Arbeitsplatte (6) versehen ist, und das Wägegerät (7, 8, 9) eine Wägevorrichtung mit einem über Stützelemente (8) mit der Wägevorrichtung verbundenen Wägeteller (9), einer Tastatur (11) und einem Preisund/oder Gewichtsanzeigemittel aufweist, dadurch gekennzeichnet, daß die Wägevorrichtung unterhalb der Arbeitsplatte (6) angeordnet ist, und daß die Preis- und/oder Gewichtsanzeigemittel wenigstens eine Anzeigetafel (10) aufweisen, die derart am Ladentisch befestigt ist, daß sie von einer Längsseite der Arbeitsplatte (6) betrachtbar ist, und daß die Tastatur (11) derart am Ladentisch befestigt ist, daß sie von der gegenüberliegenden Längsseite der Arbeitsplatte bedienbar ist.

2. Ladentisch nach Anspruch 1, dadurch gekennzeichnet, daß die Oberseite (9') des Wägetellers (9) in einer Ebene mit der Oberseite (6') der Arbeitsplatte (6) liegt.

3. Ladentisch nach Anspruch 1, dadurch gekennzeichnet, daß die Stützelemente (8) durch die Arbeitsplatte hindurch-geführt sind und der Wägeteller mit geringem Abstand zur Oberseite der Arbeitsplatte angeordnet ist.

4. Ladentisch nach einem der Ansprüche 1 bis 3, dadurch gekennzeichnet, daß die Anzeigetafel (10) an jedem gewünschten Ort in oder am Ladentisch befestigbar ist.

5. Ladentisch nach einem der Ansprüche 1 bis 4, dadurch gekennzeichnet, daß die Tastatur (11) neben dem Wägeteller (9) angeordnet ist, wobei die Tasten in einer Ebene mit der Oberseite (6') der Arbeitsplatte (6) liegen.

6. Ladentisch nach einem der Ansprüche 1 bis 5, dadurch gekennzeichnet, daß in der Nähe der Tastatur (11) eine zweite Anzeigetafel (13) vorgesehen ist, die derart am Ladentisch befestigt ist, daß sie von der gegenüberliegenden Seite der Arbeitsplatte (6) betrachtbar ist.

7. Ladentisch nach einem der Ansprüche 1 bis 6, dadurch gekennzeichnet, daß das Preis- und/oder Gewichtsanzeigemittel eine Druckereinheit (12) aufweist.

8. Ladentisch nach Anspruch 3, dadurch gekennzeichnet, daß vier Stützelemente (8) für den Wägeteller (9) vorgesehen sind, welche über vier Durchführungen über eine feuchtigkeitsfeste Dichtung durch die Arbeitsplatte (6) hindurch-geführt sind.

## Revendications

1. Un comptoir pour marchandises équipé d'un dispositif électronique de pesage, ledit comptoir (1, 2) étant livré avec au moins un plan de travail (6), et ledit dispositif de pesage (7, 8, 9) comprenant une plate-forme de pesage (9) reliée au dispositif de pesage par les éléments de support (8), un clavier (11) et un dispositif d'affichage des prix et/ou poids, caractérisé par le fait que le mécanisme de pesage se trouve sous le plan de travail (6) et que le dispositif d'affichage des prix et/ou poids comprend au moins un panneau d'affichage (10) fixé au comptoir afin d'être visible d'un côté longitudinal du plan de travail (6), et que le clavier (11) est monté sur le comptoir afin d'être utilisable depuis le côté longitudinal opposé du plan de travail (6).

2. Un comptoir tel que décrit à la revendication 1, caractérisé par le fait que la surface supérieure (9') de la plate-forme de pesage (9) est coplanaire à la surface supérieure (6') du plan de travail (6).

3. Un comptoir tel que décrit à la revendication 1, caractérisé par le fait que les éléments de support sont fixés dans le plan de travail, la plate-forme de pesage se trouvant à faible distance de la surface supérieure du plan de travail.

4. Un comptoir tel que décrit à l'une des revendications 1-3, caractérisé par le fait que le panneau d'affichage (10) est monté dans ou sur le comptoir, à l'endroit voulu.

5. Un comptoir tel que décrit à l'une des revendications 1-4, caractérisé par le fait que le clavier (11) se situe à côté de la plate-forme de pesage (9), les touches se trouvant en relation coplanaire avec la surface supérieure (6') du plan de travail.

6. Un comptoir tel que décrit à l'une des revendications 1-5, caractérisé par le fait qu'un second panneau d'affichage (13), monté sur le comptoir de manière à être visible du côté opposé du plan de travail (6), se trouve à côté du clavier (11).

7. Un comptoir tel que revendiqué à l'une des revendications 1-6, caractérisé par le fait que le dispositif d'affichage des prix et/ou poids est équipé d'une unité d'impression (12).

8. Un comptoir tel que revendiqué à la revendication 3, caractérisé par le fait que la plate-forme de pesage comprend quatre éléments de support (8) qui sont fixés dans quatre passages dans le plan de travail, étanchés par un scellement à l'épreuve de l'humidité.

FIG·1

FIG·2

FIG.3